# EUROPÄISCHE PATENTSCHRIFT

(11) **EP 1 365 324 B1**
(45) Veröffentlichungstag und Bekanntmachung des Hinweises auf die Patenterteilung: **24.08.2005**
(21) Anmeldenummer: 03003784.0
(22) Anmeldetag: 19.02.2003
(51) Int. Cl.: G06F 11/14

(54) **Datensicherungs-, Austausch und Entstörungsverfahren für mobile und feststehende Rechnersysteme wie Notebooks oder Desktop-PCs**
Method for backup, data exchange and recovery for mobile and fixed computers like notebooks or desktop PCs
Procédé de sauvegarde, d'échange et de restauration de données pour ordinateurs portable et fixes tels que ceux du type "notebook" ou des ordinateurs de bureau

(30) Priorität: 30.04.2002 DE 10219344
(43) Veröffentlichungstag der Anmeldung: 26.11.2003
(73) Patentinhaber: Fujitsu Siemens Computers GmbH, 80807 München (DE)
(72) Erfinder: Oberreiner, Alexander, 86556 Kühbach (DE); Fischer, Raimund, 86316 Friedberg (DE)
(74) Vertreter: Epping - Hermann - Fischer

(56) Entgegenhaltungen:
- EP-A- 0 917 060
- EP-A- 1 077 411
- DE-A- 19 521 810
- COMPUTER ASSOCIATES: "BrightStor ARCserve Backup for Small Business Server -- Features, Descriptions, Benfits" INTERNET ARTICLE, 2001, XP002252082 Gefunden im Internet: <URL:http://www3.ca.com/Files/BrochuresAnd Descriptions/bab_sbs_fdb.pdf> [gefunden am 2003-08-22]
- DANTZ DEVELOPMENT CORPORATION: "Retrospect -- The best backup software for any storage device" INTERNET ARTICLE, [Online] 1997, Seiten 1-2, XP002255900 Gefunden im Internet: <URL:http://www.datastor.co.nz/Datastor/PD Flinks.nsf/0/44cd9c861961cf654c2566ce0012f 6d4/$FILE/retro.pdf> [gefunden am 2003-09-26]
- "Workstation Backup Made Easy with DataKeeper Snap Edition -- White Paper" PC WEEK, ZIFF-DAVIS, NEW YORK, NY, US, 21. Juni 1999 (1999-06-21), Seite 53 XP002252084 ISSN: 0740-1604
- TEAC AMERICA: "USB CD-RW Drive -- External 4x4x6 Drive for PC and Mac" INTERNET ARTICLE, [Online] 2000, XP002255901 Gefunden im Internet: <URL:http://www.teac.com/DSPD/CD-RW%20Driv es/4x4x6USBCDRW.pdf> [gefunden am 2003-09-26]
- RIC GETTER: "Backup Basics" INTERNET ARTICLE, [Online] 21. Februar 2001 (2001-02-21), Seiten 1-3, XP002255902 Gefunden im Internet: <URL:http://www.macinstruct.com/tutorials/ backup/backup.pdf> [gefunden am 2003-09-26]
- ANONYMOUS: "How to Buy an Energy-Efficient Personal Computer" INTERNET ARTICLE, [Online] Juli 2000 (2000-07), Seite 1-2 XP002255903 Gefunden im Internet: <URL:http://www.eere.energy.gov/femp/procu rement/pdfs/computer.pdf> [gefunden am 2003-09-26]
- TENON INTERSYSTEMS: "Preserving and Restoring iTools Configuration" INTERNET ARTICLE, [Online] 17. Dezember 1999 (1999-12-17), Seiten 1-7, XP002255904 Gefunden im Internet: <URL:http://www.tenon.com/support/itools5/ papers/itools-reference.pdf> [gefunden am 2003-09-26]

## Beschreibung

Die Erfindung betrifft ein Datensicherungs-, Austausch und Entstörungsverfahren für mobile und feststehende Rechnersysteme wie Notebooks oder Desktop-PCs, bei dem auf einem ersten Datenträger gespeicherte Informationen von einem ersten Rechnersystem mit einer ersten Arbeitsumgebung auf einen zweiten geeigneten Datenträger gesichert werden.

Notebook oder Desktop-PCs sind hochtechnische Produkte die in vielfältigen Ausführungsformen und Preiskategorien erhältlich sind. Dabei unterscheiden sich diese Produkte nicht nur in Größe, Ausführungsform und Leistungsfähigkeit der Hardware, sondern auch durch die auf diesen Produkten installierte und verwendete Software. Jedes dieser Rechnersysteme ist mit mindestens einem Betriebssystem ausgestattet, welches letztendlich auch für eine korrekte Zusammenarbeit zwischen den verwendeten Anwendungssoftwareprodukten und der zur Verfügung stehenden in dem Rechnersystem installierten Hardwarekomponenten sorgt.

Auf Grund der Vielfalt der verwendbaren Hardwareprodukte und der zur Verfügung stehenden Softwareprodukte ergibt sich eine unzählige Vielfalt von Kombinationsmöglichkeiten die auf einem solchen Rechnersystem vorfindbar sind. Einstellungen im Betriebssystem des Rechnersystems und in den einzelnen installierten Softwareprodukten auch als Systemeinstellungen bezeichnet, ermöglichen erst die Funktion des Gesamtsystems.

Ein Defekt, einer an diesem Rechnersystem beteiligten Komponente führt in vielen Fällen zu einem Ausfall des gesamten Rechnersystems. Um die Arbeitsbereitschaft des Rechnersystems wieder herzustellen muß in den meisten Fällen mit einem mehrtägigen Ausfall des Rechnersystems gerechnet werden, berücksichtigt man die benötigte Zeit für die Lokalisierung der Fehlerursache, für die Beschaffung der Ersatzkomponenten und für die Installation der Ersatzkomponenten im Rechnersystem.

Großrechenanlagen, Serversysteme oder ähnliche Systeme, bei denen zu einer Sicherstellung der Hochverfügbarkeit auch entsprechende Mittel bereitgestellt sind, verfügen aus diesem Grunde über redundante Systemaufbauten oder Systemkomponenten um solche Ausfallzeiten zu minimieren, oder ganz zu vermeiden.

Für den Bereich der Notebook und Desktop-PCs jedoch ist die Bereitstellung von redundanten Systemen, allein schon auf Grund der dann erforderlichen Masse von Systemen, nicht sinnvoll.

Bei solchen Systemen behilft man sich einer Datensicherung der auf einer Festplatte gespeicherten Daten. Der Umfang dieser Datensicherung und die Entscheidung über das Datensicherungsverfahren, sowie über die Art und Menge der gesicherten Daten, obliegt dabei alleine dem Benutzer bzw. dem Administrator. Bei einem Ausfall eines solchen Systems ist es aus diesem Grunde nicht selten der Fall, daß neben den gesamten Systemeinstellungen, auch die Benutzerdateien und Anwendungsdateien nach der Reparatur und Neu-Installation nicht mehr verfügbar sind. Selbst Benutzer, die im Idealfalle den gesamten Dateninhalt eines Datenträgers gesichert haben, stehen vor dem Problem, daß bei einem Austausch des gegebenenfalls noch funktionierenden Datenträgers in ein anderes Rechnersystem sämtliche Systemeinstellungen aufgrund anderer Hardwareumgebung ihre Gültigkeit und damit ihre Wirkung verlieren. Eine zeitaufwendige und komplette Neuinstallation des Systems, hardware- sowie auch softwareseitig, ist damit erforderlich. Es bleibt also auch im Idealfall ein hoher Zeitaufwand zur Wiederherstellung der Betriebsbereitschaft des Rechnersystems.

Aus der Druckschrift EP 0917060 A1 ist ein System zur Wiederherstellung eines Computers mittels eines wechselbaren hochkapazitiven Mediums bekannt. Dabei ist das hochkapazitive Medium mit allen Daten ausgestattet, die notwendig sind, damit ein Nutzer die Umgebung vorfindet, die ihn bisher bekannt ist.

Es ist Aufgabe der Erfindung, ein Verfahren anzubieten, bei dem der Zeitaufwand und die damit einhergehende Ausfallzeit reduziert werden kann, die zur Migration der Daten zum Ersatzrechner und wieder zurück auf den repasierten ersten Rechner benötigt wird. Diese Aufgabe wird erfindungsgemäß durch ein Verfahren gemäß Anspruch 1 gelöst.

Es ist sinnvoll, für das erfindungsgemäße Datensicherungsverfahren, in eine Sicherung zumindest die folgenden Informationen einzubeziehen.
- Systemeinstellungen,
- Benutzerdateien,
- Lizenzinformationen,
- Verzeichnisse und/oder gesamte Laufwerke,
- benutzerspezifische Einstellungen des Rechnersystems,
- und benutzerspezifische Einstellungen von Anwendungsprogrammen,

Es ist vorteilhaft, die Daten in einer inkrementiellen Weise zu sichern, das heißt nur neue, oder veränderte Daten werden gesichert. Damit wird der Zeitbedarf für einen einzelnen Sicherungslauf deutlich gegenüber einer Gesamtsicherung reduziert.

Es ist ein zweites Rechnersystem vorgehalten, wobei dieses zweite Rechnersystem als "Redundanz" für eine beliebige Anzahl von ersten Rechnersystemen zur Verfügung steht. Erfindungsgemäß verfügt das erste Rechnersystem über einen zweiten Datenträger, der als Sicherung für die Systemeinstellungen, Benutzerdateien, Lizenzinformationen, Anwendungsdateien, ganze Verzeichnisse oder gesamte Laufwerke benutzerspezifische Einstellungen des Rechnersystems und benutzerspezifische Einstellungen der Anwendungsprogramme fungiert.

Zum Management der Sicherungen wird eine dafür speziell angepaste Sicherungssoftware herangezogen. Die Sicherungssoftware umfasst Funktionalitäten, die es ermöglichen, nicht nur Anwenderdaten bzw. Benutzerdateien, sondern auch Systemeinstellungen, Lizenzinformationen und benutzerspezifische Einstellungen der installierten Anwendungsprogramme auf den zweiten Datenträger so abzulegen, daß sie in geeigneter Weise ausgelesen werden können.

Fällt nun das erste Rechnersystem auf Grund eines Defektes nur einer Komponente aus, werden die Vorteile des erfindungsgemäßen Verfahrens deutlich. Der zweite Datenträger der die gesamten gesicherten Informationen enthält, wird dem defekten Gerät entnommen und mit dem zweiten Rechnersystem verbunden. An diesem sorgt nun die gleiche Sicherungssoftware in umgekehrter Weise für die Verbindung der gesicherten Systeminformationen und Benutzerdaten mit der allgemeinen System- und Softwareinstallation des zweiten Rechnersystems, so daß der Benutzer die gleiche Arbeitsumgebung vorfindet, wie er sie zum Stand der letzten Sicherung am ersten Rechnersystem verlassen hatte.

Als zweiter Datenträger bzw. als Sicherungsmedium eignen sich in vorteilhafter Weise alle frei beschreibbaren Datenträger, incl. Der Microfestplatten, die in mobilen Systemen in PCMCIA-Slot betrieben werden werden können.

Des weiteren bietet sich an, die Erfindung auf folgende vorteilhafte Weise so zu erweitern, daß der Zeitpunkt der Datensicherung nicht durch den Benutzer alleine, sondern auch durch ein bestimmtes Ereignis ausgelöst wird. Ein solches Ereignis kann sein:
- Das Abschalten des ersten Rechnersystems, oder
- das Erreichen einer bestimmten Zeit, oder
- der Ablauf einer vorbestimmten Betriebsdauer oder
- das Inkrafttreten eines bestimmten Systemzustandes

Damit ist sichergestellt, daß stets aktuelle Datensicherungen verfügbar sind, ohne daß dabei auf eine Anweisung durch den Benutzer gewartet werden muß.

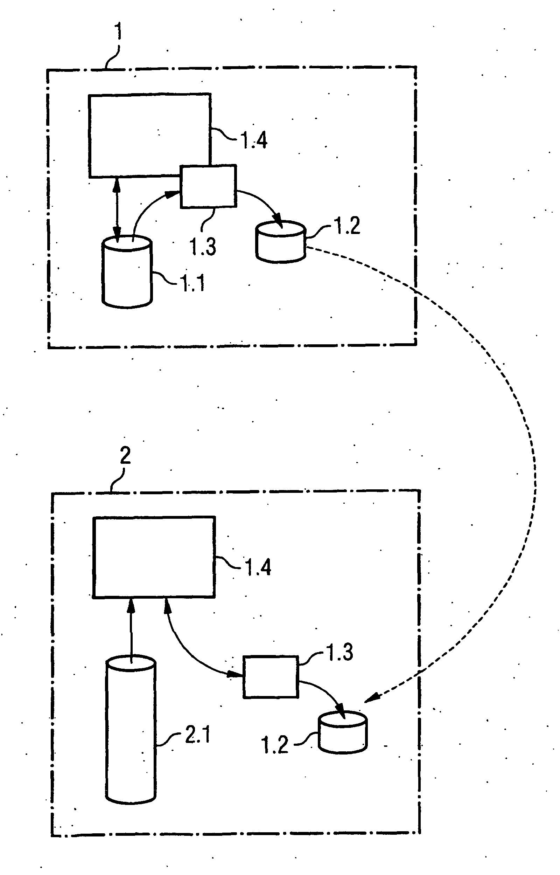

Im Folgenden ist die Erfindung anhand eines in der Figur dargestellten Ausführungsbeispieles näher beschrieben.

Es zeigt die Figur ein erstes Rechnersystem 1 und ein zweites Rechnersystem 2 in schematischer Darstellung mit den für das Verfahren wesentlichen Komponenten ebenfalls in schematischer Darstellung.

Das Rechnersystem 1 enthält dabei einen ersten Datenträger 1.1 und einen zweiten Datenträger 1.2. Als zweiter Datenträger 1.2 eignen sich dazu die im Folgenden stichpunktartig genannten zum Zeitpunkt der Erfindung verfügbaren, sinnvollen Datenträgervarianten.

Im einzelnen sind dies:
- eine zusätzlich in das System, bzw. in das erste Rechnersystem eingebaute Festplatte,
- eine PCMCIA-Festplatte, die idealerweise für Notebooks, aber bei entsprechendem Schnittstellencontroller auch für Desktop-PCs verwendbar ist,
- Netzlaufwerke über ein lokales Netzwerk, kurz LAN,
- externe Datenträger, wie ein Memorybird oder externe Speicherkarten, wie sie für Digitalkameras verfügbar sind,
- Datenträger wie Zip-Laufwerke, Jazz-Laufwerke usw. und es eigenen sich im allgemeinen
- Datenträger jeglicher Art, die über Schnittstellen wie Parallelport, USB, Firewire, SCSI usw.
angeschlossen werden können.

Das Management der Datensicherung übernimmt dabei die Datensicherungssoftware bzw. Datensicherungskomponente 1.3. Sie entnimmt die zu sichernden Daten dem ersten Datenträger 1.1 und überführt sie auf den zweiten Datenträger 1.2.
Fällt bei dem ersten Rechnersystem der zweite Datenträger 1.2 durch einen Defekt aus, so kann er einfach durch einen weiteren zweiten Datenträger 1.2 ersetzt werden. Entfällt das gesamte Rechnersystem 1 durch einen Ausfall einer beliebigen anderen Komponente, so befinden sich auf dem zweiten Datenträger 1.2 alle notwendigen Informationen um am Rechnersystem 2 die Arbeitsumgebung 1.4 des Rechnersystems 1 wieder herzustellen.

Vorteilhaft an dem vorgeschlagenen Verfahren ist des weiteren die Möglichkeit der inkrementellen Sicherung, d. h. ein Sicherungslauf bezieht sich alleinig auf die neu hinzugekommenen oder die veränderten Daten und sichert nicht stets die gesamten Informationen des ersten Datenträgers, wodurch die Datensicherungszeit stark verkürzt werden kann. Somit bietet es sich an, eine event-bezogene Datensicherung z. B. beim Abschalten des Rechnersystems auszuführen.

Bei jedem Sicherungslauf können auf dem zweiten Datenträger 1.2 frei definierte Dateien, z. B. Benutzerdateien, Dokumente, Präsentationen, Graphiken etc. oder komplette Verzeichnisse und Laufwerke gesichert werden.

Weiterhin können, im Falle eines Windowsbetriebssystems, Teile der Windowsregistrierung gesichert werden. Desweiteren können benutzerdefinierte Einstellungen, wie z. B. Netzwerkeinstellungen, DFÜ-Einstellungen, Internetfavoriten, spezifische Anwendereinstellungen, Spracheinstellungen und Landesspezifische Einstellungen, sowie diverse andere Einstellungen und Daten der jeweiligen Anwendungsprogramme gesichert werden. Die Datensicherungssoftware 1.3 erkennt das Vorhandensein solcher Daten und übernimmt deren Sicherung. Zusätzlich werden auch noch Betriebssystem relevante Daten wie die Landessprache, Lizenzcodes des Betriebssystems und aller vorhandenen Anwendungsprogramme gesichert, da diese für die Wiederherstellung der Arbeitsumgebung 1.4 auf dem zweiten Rechnersystem benötigt werden.

Dabei erfolgt die Sicherung der Daten in einem inkrementiellen Verfahren, d. h. nur geänderte bzw. neue Daten werden gesichert.

Die Auslösung des Sicherungsereignisses kann durch manuelle Aufforderung durch den Benutzer erfolgen oder auch automatisch ausgelöst werden. Als in Frage kommende Ereignisse bieten sich an:
- die Sicherung in einem bestimmten einstellbaren Zeitrhythmus,
- die Sicherung zu vorbestimmten Zeiten,
- die Sicherung bei jedem Systemstart oder Systemende und
- die Sicherung bei Eintritt eines Ruhezustands des Systems.

Im Havariefall des ersten Rechnersystems 1 steht erfindungsgemäß ein zweiter Datenträger 1.2 mit ausreichend Informationen zur Verfügung, die es erlauben an einem bereitgestellten Rechnersystem 2 durch Verbindung mit dem Datenträger 1.2 und dem sich auf diesen Rechnersystem befindlichen Daten des dritten Datenträgers 2.1 und der dort zur Verfügung stehenden Datensicherungssoftware 1.3 die Daten der beiden Datenträger so mit einander zu verbinden, daß der Benutzer den gleichen Datenbestand und somit die gleiche Arbeitsumgebung 1.4 wieder findet, wie er sie bei Stand der letzten Datensicherung verlassen hat.

Die neu entstehenden Daten, bzw. neu hinzukommenden Daten und veränderte Daten werden nicht auf dem dritten Datenträger 2.1 des zweiten Rechnersystems gesichert, sondern auf dem zweiten Datenträger 1.2 der mit diesem "redundanten" Rechnersystem verbunden ist. Der Benutzer arbeitet für den Verlauf der Reparatur am ersten Rechnersystem mit einem zweiten Rechnersystem und hat dort seine Daten und seine Arbeitsumgebung 1.4 zur Verfügung.

Nach Beendigung der Reparatur an dem ersten Rechnersystem erhält der Benutzer dieses wieder zurück, entfernt den zweiten Datenträger 1.2 aus dem zweiten Rechnersystem 2 und verbindet ihn wieder mit dem ersten Rechnersystem 1, wobei die Datensicherungssoftware 1.3 die veränderten und aktualisierten Daten auf den ersten Datenträger 1.3 überführt. Damit ist erreicht, daß auch bei einer mehrtägigen Reparatur des ersten Rechnersystems der Benutzer bereits nach wenigen Stunden mit einem Ersatzgerät in seiner gewohnten Arbeitsumgebung 1.4 weiterarbeiten kann und später ebenfalls ohne Datenverlust und ohne Verlust der gewohnten Umgebung sein bisheriges nun repariertes System zurückerhält und wieder mit diesem weiter arbeiten kann.

## Patentansprüche

1. Verfahren mit einem ersten Rechnersystem (1) und einem zweiten Rechnersystem (2) bei dem das erste Rechnersystem (1) im Havariefall durch das zweite Rechnersystem (2), für die Dauer der Reparatur des ersten Rechnersystems (1), ersetzt ist und wobei das erste Rechnersystem (1) einen ersten Datenträger (1.1) und zumindest einen zweiten Datenträger (1.2) aufweist und wobei Mittels einer Sicherungssoftware (1.3) Anwenderdaten und Systemdaten des ersten Rechnersystems (1) auf dem zweiten Datenträger (1.2) gesichert werden, und wobei das zweite Rechnersystem die Sicherungssoftware (1.3) und einen dritten Datenträger (2.1) aufweist, der zumindest länderspezifische Systemeinstellungen und Softwareprodukte des ersten Rechnersystems (1) vorhält, und wobei der zweite Datenträger (1.2) im Havariefall des ersten Rechnersystems (1) von dem ersten Rechnersystem (1) getrennt und mit dem zweiten Rechnersystem (2) verbunden wird, wobei das zweite Rechnersystem (2) als ein redundantes Rechnersystem für eine beliebige Anzahl von ersten Rechnersystemen (1) vorgehalten ist, **dadurch gekennzeichnet daß** während des Betriebs des zweiten Rechnersystems (2) entstehende Daten nicht auf dem dritten Datenträger, sondern mittels der Sicherungssoftware (1.3) auf dem zweiten Datenträger (1.2) gespeichert werden und nach Beendigung der Reparatur des ersten Rechersystems (1) der zweite Datenträger (1.2) vom zweiten Rechnersystem (2) getrennt wird und mit dem ersten Rechnersystem (1) verbunden wird, wobei die Sicherungssoftware (1.3) die mittels des zweiten Rechnersystems (2) veränderten Anwenderdaten auf den ersten Datenträger (1.1) überträgt.

2. Datensicherungsverfahren nach Patentanspruch 1, bei dem als zweiter geeigneter Datenträger (1.2) jeder frei beschreibbare Datenträger, der bei einem vorhandenen Betriebsystem einen Laufwerksbuchstaben bereitstellt, herangezogen werden kann.

3. Datensicherungsverfahren nach Patentanspruch 1 - 2, bei dem die Sicherung der Informationen durch den Benutzer oder durch ein vorbestimmtes Ereignis ausgelöst wird.

4. Datensicherungsverfahren nach Patentanspruch 1 - 3, bei dem das erste und das zweite Rechnersystem (1, 2) mobile PCs sind.

5. Datensicherungsverfahren nach einem der vorhergehenden Patentansprüche, bei dem die Daten inkrementiell gesichert werden.

6. Datensicherungsverfahren nach einem der vorhergehenden Patentansprüche, bei dem Benutzerdateien in die Datensicherung einbezogen werden.

7. Datensicherungsverfahren nach einem der vorhergehenden Patentansprüche, bei dem Lizenzinformationen in die Datensicherung einbezogen werden.

8. Datensicherungsverfahren nach einem der vorhergehenden Patentansprüche, bei dem benutzerspezifische Einstellungen des Rechnersystems (1) in die Datensicherung einbezogen werden.

9. Datensicherungsverfahren nach einem der vorhergehenden Patentansprüche, bei dem benutzerspezifische Einstellungen von Anwendungsprogrammen in die Datensicherung einbezogen werden.

10. Datensicherungsverfahren nach einem der vorhergehenden Patentansprüche, bei dem eine zusätzlich in das erste Rechnersystem eingebaute Festplatte als zweiter Datenträger (1.2) dient.

11. Datensicherungsverfahren nach einem der vorhergehenden Patentansprüche, bei dem eine PCMCIA-Festplatte als zweiter Datenträger (1.2) dient.

12. Datensicherungsverfahren nach einem der vorhergehenden Patentansprüche, bei dem Netzlaufwerke über ein lokales Netzwerk als geeigneter zweiter Datenträger (1.2) dienen.

13. Datensicherungsverfahren nach einem der vorhergehenden Patentansprüche, bei dem externe Datenträger als zweiter Datenträger (1.2) dienen.

14. Datensicherungsverfahren nach einem der vorhergehenden Patentansprüche, bei dem Zip-Laufwerke und/oder Jazz-Laufwerke als zweiter Datenträger (1.2) dienen.

15. Datensicherungsverfahren nach einem der vorhergehenden Patentansprüche, bei dem Datenträger die über eine parallele Schnittstelle angesprochen werden können als zweiter Datenträger (1.2) dienen.

16. Datensicherungsverfahren nach einem der vorhergehenden Patentansprüche, bei dem Datenträger die über eine USB-Schnittstelle angesprochen werden können als zweiter Datenträger (1.2) dienen.

17. Datensicherungsverfahren nach einem der vorhergehenden Patentansprüche, bei dem Datenträger die über eine SCSI Schnittstelle angesprochen werden können als zweiter Datenträger (1.2) dienen.

18. Datensicherungsverfahren nach einem der vorhergehenden Patentansprüche, bei dem die Datensicherung in einem bestimmten einstellbaren Zeitrhythmus ausgeführt wird.

19. Datensicherungsverfahren nach einem der vorhergehenden Patentansprüche, bei dem die Datensicherung zu einer vorbestimmten Zeit ausgeführt wird

20. Datensicherungsverfahren nach einem der vorhergehenden Patentansprüche, bei dem die Datensicherung bei jedem Systemstart ausgeführt wird.

21. Datensicherungsverfahren nach einem der vorhergehenden Patentansprüche, bei dem die Datensicherung beim Schließen des Betriebsystems ausgeführt wird.

22. Datensicherungsverfahren nach einem der vorhergehenden Patentansprüche, bei dem die Datensicherung vor einem Ruhezustand des Systems ausgeführt wird.

## Claims

1. Method with a first computer system (1) and a second computer system (2), in which, in the case of breakdown, the first computer system (1) is replaced by the second computer system (2) for the duration of the repair of the first computer system (1), and the first computer system (1) having a first data carrier (1.1) and at least one second data carrier (1.2), and user data and system data of the first computer system (1) being backed up on the second data carrier (1.2) by means of a backup software (1.3), and the second computer system having the backup software (1.3) and a third data carrier (2.1), which stores at least country-specific system settings and software products of the first computer system (1), and, in the case of breakdown of the first computer system (1), the second data carrier (1.2) being separated from the first computer system (1) and being connected to the second computer system (2),
the second computer system (2) being kept as a redundant computer system for an arbitrary number of first computer systems (1), **characterized in that**
data arising during the operation of the second computer system (2) are not stored on the third data carrier but rather are stored on the second data carrier (1.2) by means of the backup software (1.3) and, after the end of the repair of the first computer system (1), the second data carrier (1.2) is separated from the second computer system (2) and is connected to the first computer system (1), the backup software (1.3) transmitting the user data that have been altered by means of the second computer system (2) onto the first data carrier (1.1).

2. Data backup method according to Patent Claim 1, in which any freely writable data carrier that provides a drive letter in an operating system present can be used as second suitable data carrier (1.2).

3. Data backup method according to Patent Claims 1-2, in which the backup of the information items is initiated by the user or by a predetermined event.

4. Data backup method according to Patent Claims 1-3, in which the first and the second computer system (1, 2) are mobile PCs.

5. Data backup method according to one of the preceding claims, in which the data are backed up incrementally.

6. Data backup method according to one of the preceding claims, in which user files are included in the data backup.

7. Data backup method according to one of the preceding claims, in which licence information items are included in the data backup.

8. Data backup method according to one of the preceding claims, in which user-specific settings of the computer system (1) are included in the data backup.

9. Data backup method according to one of the preceding claims, in which user-specific settings of application programs are included in the data backup.

10. Data backup method according to one of the preceding claims, in which a hard disk that is additionally incorporated into the first computer system serves as second data carrier (1.2).

11. Data backup method according to one of the preceding claims, in which a PCMCIA hard disk serves as second data carrier (1.2).

12. Data backup method according to one of the preceding claims, in which network drives via a local area network serve as suitable second data carrier (1.2).

13. Data backup method according to one of the preceding claims, in which external data carriers serve as second data carrier (1.2).

14. Data backup method according to one of the preceding claims, in which Zip drives and/or Jaz drives serve as second data carrier (1.2).

15. Data backup method according to one of the preceding claims, in which data carriers that can be addressed via a parallel interface serve as second data carrier (1.2).

16. Data backup method according to one of the preceding claims, in which data carriers that can be addressed via a USB interface serve as second data carrier (1.2).

17. Data backup method according to one of the preceding claims, in which data carriers that can be addressed via an SCSI interface serve as second data carrier (1.2).

18. Data backup method according to one of the preceding claims, in which the data backup is executed in a specific time rhythm that can be set.

19. Data backup method according to one of the preceding claims, in which the data backup is executed at a predetermined time.

20. Data backup method according to one of the preceding claims, in which the data backup is executed upon every system start.

21. Data backup method according to one of the preceding claims, in which the data backup is executed upon closing the operating system.

22. Data backup method according to one of the preceding claims, in which the data backup is executed prior to an idle state of the system.

## Revendications

1. Procédé utilisant un premier système informatique (1) et un deuxième système informatique (2), dans lequel
le premier système informatique (1) est remplacé en cas de panne par le deuxième système informatique (2) pendant la durée de réparation du premier système informatique,
le premier système informatique (1) comporte un premier support de données (1.1) et au moins un deuxième support de données (1.2),
des donnés utilisateurs et des données de système du premier système informatique (1) sont sauvegardées au moyen d'un logiciel de sauvegarde (1.3) sur le deuxième support de données (1.2),
le deuxième système informatique comporte le logiciel de sauvegarde (1.3) et un troisième support de données (2.1) qui conserve au moins des réglages de système régionaux et des produits logiciels du premier système informatique (1), et
le deuxième support de données (1.2) est séparé du premier système informatique (1) en cas de panne du premier système informatique (1) et est relié au deuxième système informatique (2), le deuxième système informatique (2) étant conservé comme système informatique redondant pour un nombre quelconque de premiers systèmes informatiques (1),
**caractérisé en ce que** les données générées pendant le fonctionnement du deuxième système informatique (2) ne sont pas mémorisées sur le troisième support de données mais sur le deuxième support de données (1.2) au moyen du logiciel de sauvegarde (1.3) et, à la fin de la réparation du premier système informatique (1), le deuxième support de données (1.2) est séparé du deuxième système informatique (2) et est relié au premier système informatique (1), le logiciel de sauvegarde (1.3) transmettant au premier support de données (1.1) les données d'utilisateur modifiées au moyen du deuxième système informatique (2).

2. Procédé de sauvegarde de données selon la revendication 1, dans lequel chaque support de données, sur lequel on peut écrire librement et qui dispose d'un caractère de lecteur dans le cas d'un système d'exploitation existant, peut être utilisé comme deuxième support de données approprié (1.2).

3. Procédé de sauvegarde de données selon les revendications 1 et 2, dans lequel la sauvegarde des informations est déclenchée par l'utilisateur ou par un événement prédéterminé.

4. Procédé de sauvegarde de données selon les revendications 1 à 3, dans lequel les premier et deuxième systèmes informatiques (1, 2) sont des PC mobiles.

5. Procédé de sauvegarde de données selon l'une des revendications précédentes, dans lequel les données sont sauvegardées de façon incrémentielle.

6. Procédé de sauvegarde de données selon l'une des revendications précédentes, dans lequel des fichiers d'utilisateur sont inclus dans la sauvegarde de données.

7. Procédé de sauvegarde de données selon l'une des revendications précédentes, dans lequel des informations de licence sont incluses dans la sauvegarde de données.

8. Procédé de sauvegarde de données selon l'une des revendications précédentes, dans lequel des réglages, spécifiques à l'utilisateur, du système informatique (1) sont inclus dans la sauvegarde de données.

9. Procédé de sauvegarde de données selon l'une des revendications précédentes, dans lequel des réglages, spécifiques à l'utilisateur, des programmes d'application sont inclus dans la sauvegarde de données.

10. Procédé de sauvegarde de données selon l'une des revendications précédentes, dans lequel un disque dur, incorporé en plus dans le système informatique, sert de deuxième support de données (1.2).

11. Procédé de sauvegarde de données selon l'une des revendications précédentes, dans lequel un disque dur PCMCIA sert de deuxième support de données (1.2).

12. Procédé de sauvegarde de données selon l'une des revendications précédentes, dans lequel des lecteurs en réseau servent de deuxième support de données approprié (1.2) par l'intermédiaire d'un réseau local.

13. Procédé de sauvegarde de donnée selon l'une des revendications précédentes, dans lequel des supports de données externes servent de deuxième support de données (1.2).

14. Procédé de sauvegarde de données selon l'une des revendications précédentes, dans lequel des lecteurs Zip et des lecteurs Jazz servent de deuxième support de données (1.2).

15. Procédé de sauvegarde de données selon l'une des revendications précédentes, dans lequel des supports de données, auxquels on peut accéder par l'intermédiaire d'une interface parallèle, servent de deuxième support de données (1.2).

16. Procédé de sauvegarde de données selon l'une des revendications précédentes, dans lequel des supports de données, auxquels on peut accéder par l'intermédiaire d'une interface USB, servent de deuxième support de données (1.2).

17. Procédé de sauvegarde de données selon l'une des revendications précédentes, dans lequel des supports de données, auxquels on peut accéder par l'intermédiaire d'une interface SCSI, servent de deuxième support de données (1.2).

18. Procédé de sauvegarde de données selon l'une des revendications précédentes, dans lequel la sauvegarde de données et réalisé à une cadence déterminée réglable.

19. Procédé de sauvegarde de données selon l'une des revendications précédentes, dans lequel la sauvegarde de données est réalisée à un moment prédéterminé.

20. Procédé de sauvegarde de données selon l'une des revendications précédentes, dans lequel la sauvegarde de données est réalisée à chaque démarrage du système.

21. Procédé de sauvegarde de données selon l'une des revendications précédentes, dans lequel la sauvegarde de données est réalisée lors de l'arrêt du système d'exploitation.

22. Procédé de sauvegarde de données selon l'une des revendications précédentes, dans lequel la sauvegarde de données est réalisée avant la mise en veille du système.
